# EUROPÄISCHE PATENTSCHRIFT

(11) **EP 1 206 341 B1**
(45) Veröffentlichungstag und Bekanntmachung des Hinweises auf die Patenterteilung: **09.02.2005**
(21) Anmeldenummer: 00963931.1
(22) Anmeldetag: 22.08.2000
(51) Int. Cl.: B29C 47/82, B29C 47/66

(54) **ZYLINDER FÜR EINEN DOPPELSCHNECKENEXTRUDER**
CYLINDER FOR A TWIN-SCREW EXTRUDER
CYLINDRE POUR UNE EXTRUDEUSE A DOUBLE VIS

(30) Priorität: 24.08.1999 DE 19941160
(43) Veröffentlichungstag der Anmeldung: 22.05.2002
(73) Patentinhaber: Berstorff GmbH, 30625 Hannover (DE)
(72) Erfinder: BEHLING, Michael, D-31787 Hameln (DE)
(74) Vertreter: Zollner, Richard
(86) Internationale Anmeldenummer: PCT/DE2000/002896
(87) Internationale Veröffentlichungsnummer: WO 2001/014121

(56) Entgegenhaltungen:
- DE-A- 2 208 238
- DE-A- 4 235 430

## Beschreibung

Die Erfindung betrifft einen Zylinder für einen Doppelschneckenextruder, wobei der Zylinder unter Bildung eines Extrusionsraums eine Doppetschnedce des Extruders umschließt und seinerseits von einem auf seiner Innenoberfläche glatten hohlzylindrischen Mantel umgeben ist, wobei an der Außenseite des Zylinders mindestens ein sich schraubenlinienförmig in Längsrichtung des Zylinders erstreckender Kanal eingearbeitet ist, der an eine Zu- und Ableitung für ein fließfähiges Temperiermedium anschließbar ist.

Schneckenextruder werden in vielfacher Weise für die Verarbeitung von Kunststoffen eingesetzt. Zur Gewährleistung eines qualitativ hochwertigen Arbeitsergebnisses ist es dabei wichtig, dass der verarbeitete Kunststoff mit einer möglichst gleichbleibenden in einem optimalen Bereich liegenden Temperatur extrudiert wird. Der Zylinder des Extruders, der mit einer den Abmessungen des Schneckenaggregats entsprechenden Bohrung versehen ist, die den Extrusionsraum für den zu verarbeitenden Kunststoff bildet, ist daher üblicherweise in seiner Wand von Kanälen durchzogen, durch die ein fließfähiges Temperiermedium (im Regelfall zur Kühlung, ggfs. aber auch zur Heizung) geführt werden kann.

Aus der EP 00 42 466 A1 ist ein Zylinder für einen Doppelschneckenextruder bekannt, dass der aus zwei koaxial ineinandergeführten Teilen besteht, nämlich aus einem inneren Zylinderteil, welcher eine brillenartige Doppelbohrung (Extrusionsraum) für das Doppelschneckenaggregat aufweist, und aus einem äußeren hohlzylindrischen Mantel, der den inneren -Zylinderteil eng anliegend umgibt und im Hinblick auf die durch den Extrusionsdruck hervorgerufenen Kräfte eine Tragfunktion erfüllt. Sowohl der innere Zylinderteil als auch der hohlzylindrische Mantel sind dabei mit in Längsrichtung des Zylinders verlaufenden Kanälen für ein Temperiermedium durchzogen. Um den Extrusionsraum auch im Bereich seiner dicksten Wand, nämlich im Bereich des Zwickels der Brillenbohrung möglichst effektiv kühlen zu können, sind die Kühlkanäle des inneren Zylinderteils im Bereich des Zwickels angeordnet. Im Nahbereich der durch die Längsachse des Doppelschneckenextruders aufgespannten Ebene erfolgt die Kühlung des Extrusionsraums im wesentlichen durch die Kühlkanäle des hohlzylindrischen Außenmantels. Das bedeutet, daß hierzu die Wärme aus dem inneren Zylinderteil in den hohlzylindrischen Mantel hinüberfließen muß. Dies wird durch die Trennfuge zwischen den beiden Teilen des Zylinders behindert. Daher hat man zur Verbesserung des Wärmeübergangs mit mehr oder weniger gutem Erfolg den Einsatz von Temperaturleitpasten in diesem kritischen Bereich empfohlen. In fertigungstechnischer Hinsicht hat diese Lösung den Nachteil, daß die Kühlkanäle in beiden Teilen des Zylinders angebracht werden müssen. Außerdem ist der hohlzylindrische Mantel nicht auch für den inneren Zylinderteil eines Einschneckenextruders verwendbar, da die Kühlkanäle nur auf einem Teil seines Umfangs konzentriert sind.

Aus der DE 26 59 037 C3 ist eine weitere Konstruktion für den Zylinder eines Doppelschneckenextruders bekannt, der ebenfalls aus einem inneren Zylinderteil und einem hohlzylindrischen Mantel besteht. Zur Kühlung des Extrusionsraums ist ein Kühlkanal vorgesehen, der einen einer Schraubenlinie prinzipiell ähneinden Verlauf in Längsrichtung des Zylinders aufweist. Diese Kühlkanal ist im Bereich der Trennfläche zwischen dem inneren Zylinderteil und dem hohlzylindrischen Mantel angeordnet. Er ist dabei in folgender Weise aus Teilstücken unterschiedlicher Form zusammengesetzt: An der Oberseite des inneren Zylinderteils sind mehrere äquidistant zueinander verlaufende Nuten mit senkrechten Wänden in der Weise eingefräst, daß der Grund der Nut jeweils parallel zu der von den Längsachsen des Doppelschneckenaggregats aufgespannten Ebene liegt und in seiner Längsrichtung in einem schrägen Winkel zu diesen Längsachsen steht. An der Unterseite sind in entsprechender Weise ebenfalls Nuten angeordnet, deren Ausrichtung zu den Längsachsen jedoch in genau dem entgegengesetzten Winkel gewählt ist. Die Zuordnung der unteren und oberen Nuten und deren Abstände sind so gewählt, daß ihre Enden jeweils paarweise übereinanderstehen. Um die übereinanderstehenden Enden im Hinblick auf die Durchleitung des Temperiermediums miteinander zu verbinden, sind an der Innenoberfläche des hohlzylindrischen Mantels sichelförmige Verbindungsnuten eingefräst. Der auf diese Weise erzeugte schraubenlinienartig verlaufende Kühlkanal hat den Vorteil, daß das Temperiermedium im Zwickelbereich der Brillenbohrung für das Doppelschneckenaggregat relativ dicht bis an den Extrusionsraum herangeführt wird. In fertigungstechnischer Hinsicht erfordert die Herstellung des Kühlkanals jedoch einen vergleichsweisen hohen Aufwand, da nicht nur die Nuten an der Ober- und Unterseite des inneren Zylinderteils eingefräst werden müssen, sondern auch an der Innenseite des hohlzylindrischen Mantels Fräsarbeiten für die Herstellung der Verbindungsnuten notwendig sind. Darüber hinaus ist der auf diese Weise hergestellte hohlzylindrische Mantel nur für den entsprechenden inneren Zylinderteil eines Doppelschneckenextruders verwendbar, nicht aber für einen inneren Zylinderteil eines Einschneckenextruders.

Eine weitere Lösung für einen Zylinder eines Doppelschneckenextruders, der einen inneren Zylinderteil und einen diesen umschließenden hohlzylindrischen Mantel aufweist, ist aus der gattungsbildenden DE-OS 20 61 700 bekannt. Die Wand des inneren Zylinderteils ist durch zahlreiche nebeneinander angeordnete Nuten über, unter und seitlich neben der Brillenbohrung für das Doppelschneckenaggregat eingeschnitten. Der Grund dieser Nuten verläuft abschnittsweise gradlinig oder kreisbogenförmig in der Weise, daß die verbleibene Wand zum Extrusionsraum hin überall eine in etwa gleiche Dicke aufweist. Dies erfordert einen entsprechend hohen Fertigungsaufwand. Um die einzelnen Nuten zu einem schraubenlinienartig verlaufenden Kanal für das Kühlmedium zu verbinden, sind die Nuten an der Unterseite des inneren Zylinderteils aus drei Teilstücken, von denen zwei senkrecht zu den Längsachsen des Doppelschneckenaggregats verlaufen und ein mittleres Teilstück schräg zu den Längsachsen ausgerichtet ist, so zusammengesetzt, daß sich eine Verschwenkung von einer Windung des Kühlkanals zur nächsten Windung hin ergibt. Dies trägt wiederum zu einer Erhöhung der Herstellkosten des inneren Zylinderteils bei. Da die zwischen den einzelnen Windungen des Kühlkanals verbleibenden Wände (Stege) zur Lastübertragung auf den hohlzylindrischen Mantel, der den inneren Zylinderteil umschließt, dienen sollen, sind die relativ schmal dimensionierten Stege, die über und unter der Brillenbohrung des Extrusionsraums angeordnet und ursprünglich besonders hoch sind, in einer parallel zur Ebene des Doppelschneckenaggregats verlaufenden Fläche plan abgefräst worden. Auf diese abgefrästen Flächen der Stege wird jeweils an der Oberseite und an der Unterseite des inneren Zylinderteils ein aus Vollmaterial gebildeter Zylinderabschnitt gelegt, dessen Außenkontur der Innenoberfläche des hohlzylindrischen Mantels entspricht. Diese Zylinderabschnitte decken die einzelnen Windungen des Kühlkanals nach oben hin ab. Auf diese Weise bleibt der Querschnitt des Kühlkanals über den Umfang gesehen annähernd gleich groß. Diese bekannte Konstruktion ermöglicht zwar die Verwendung eines hohlzylindrischen Mantels mit glatter Innenoberfläche, erfordert aber nicht nur einen erheblichen Fertigungsaufwand für die Erzeugung der einzelnen Windungen des Kühlkanals, sondern auch noch weiteren Aufwand für die Erstellung der beiden Zylinderabschnitte.

Aufgabe der vorliegenden Erfindung ist es, einen Zylinder für einen Doppelschneckenextruder dahingehend weiterzubilden, dass der dafür erforderliche Herstellaufwand möglichst gering bleibt, wobei eine besonders gleichmäßige und effektive Temperierung des Extrusionsraums gewährleistet sein soll. Darüber hinaus soll der hohlzylindrische Mantel des Zylinders möglichst universell verwendbar sein, also nicht nur für den inneren Zylinder eines Doppetschneckenextruders verwendet werden können. Vielmehr soll er sowohl für Ein- als auch für Mehrschneckenextruder einsetzbar sein.

Gelöst wird diese Aufgabe durch die im Patentanspruch 1 angegebenen Merkmale. Vorteilhafte Weiterbildungen der Erfindung ergeben sich aus den abhängigen Unteransprüchen.

Die vorliegende Erfindung geht aus von einem Doppelschneckenextruder mit einem Zylinder, der unter Bildung eines Extrusionsraums die Doppelschnecke des Extruders umschließt. Der Zylinder ist seinerseits von einem hohlzylindrischen Mantel umgeben, dessen Innenoberfläche glattflächig ausgebildet ist. An der Außenseite des Zylinders ist mindestens ein Kanal eingearbeitet, der sich schraubenlinienförmig in Längsrichtung des Zylinders erstreckt und an eine Zu- und Ableitung für ein fließfähiges Temperiermedium anschließbar ist. Im Unterschied zur DE - OS 20 61 700, bei der der schraubenlinienförmige Kanal in radialer Richtung über einen Teil des Zylinders von gesondert gefertigten Zylinderabschnitten abgeschlossen wird, während der entsprechende Abschluss im übrigen Bereich des Umfangs direkt durch den hohlzylindrischen Mantel erfolgt, ist bei dem erfindungsgemäß ausgebildeten Zylinder vorgesehen, dass der mindestens eine Kanal über den gesamten Umfang durch den hohlzylindrischen Mantel selbst abgeschlossen wird. Es werden also keine Bauteile benötigt, die den Zylinderabschnitten aus der DE - OS 20 61 700 entsprechen. Eine erhebliche Kostenreduzierung für den erfindungsgemäßen Zylinder ergibt sich durch den Umstand, dass der oder die Kanäle für das Temperiermedium durch einen Gewindewirbelvorgang erzeugt worden sind. Es handelt sich dabei um einen besonders einfachen Fertigungsvorgang, der mit einer Aufspannung des Werksstücks durchgeführt werden kann und Kanäle mit einem völlig gleichmäßigen Schraubenlinienverlauf erzeugt, was für die Durchströmung mit dem Temperiermedium von großem Vorteil ist. Der oder die Kanäle weisen somit keine plötzlichen Knicke oder sonstigen Strömungskanten auf.

Grundsätzlich kann der Zylinder mit einem einzigen schraubenlinienförmigen Kanal versehen sein. In den meisten Fällen wird es aber zweckmäßig sein, wie bei einem mehrgängigen Gewinde mehrere Kanäle nebeneinander vorzusehen. Vorzugsweise werden drei oder vier solcher parallel zueinander verlaufender Kanäle in die Außenseite des Zylinders eingearbeitet. Die Steigung des oder der Kanäle wird üblicherweise über die Länge des Zylinders konstant gehalten. In einzelnen Fällen kann es jedoch sinnvoll sein, diese Steigung zu verändern, um die Verweilzeit des Temperiermediums im jeweiligen Abschnitt des Zylinders entlang seiner Längsachse zu beeinflussen. Durch die Wahl einer großen Steigung kann das Temperiermedium schneller passieren als bei einer kleineren Steigung. Das Temperiermedium kann je nach Bedarf in Förderrichtung des Extruders oder auch entgegengesetzt geführt werden.

In vielen Fällen ist es vorteilhaft, eine rechteckige Querschnittsform für den oder die Kanäle vorzusehen. Die Tiefe des jeweiligen Kanals in radialer Richtung, d.h. seine Gangtiefe kann über den Umfang des Zylinders konstant bleiben. Der Vorteil ist, dass die Wanddicke des Extrusionsraums über den Umfang ebenfalls konstant ist und somit der Fließweg durch die Wand des Extrusionsraums für die zu transportierende Wärme - über den Umfang gesehen - ebenfalls konstant bleibt. Hinsichtlich der Anordnung der einzelnen Windungen des oder der Kanäle des Zylinders hat es sich als zweckmäßig erwiesen, insbesondere bei Kanälen mit rechteckigem Querschnitt und gleichbleibender Gangtiefe, die Breite des oder der Kanäle (gemessen in Längsrichtung des Zylinders) im Bereich des 0,7- bis 1,2-fachen der Dicke der Stege zwischen jeweils zwei unmittelbar nebeneinander angeordneten Windungen des oder der Kanäle einzustellen. Die Stege sind so dimensioniert, daß sie unmittelbar eine ausreichende Stützwirkung zur Lastübertragung auf den hohlzylindrischen Mantel gewährleisten, ohne daß es hierzu gesonderter Bauteile wie etwa der Zylinderabschnitte gemäß DE-OS 2061700 bedarf.

In der Ausführungsform der Erfindung, ist eine Gestaltung des oder der Kanäle mit - über den Umfang gesehen - unterschiedlicher Gangtiefe vorgesehen. Dabei wird die Gangtiefe in den Bereichen am kleinsten gewählt, in denen die ursprüngliche Wanddicke des Zylinders, also vor Einarbeitung des jeweiligen Kanals, am geringsten ist. Die größte Gangtiefe wird in den Bereichen vorgesehen, in denen die ursprüngliche Wanddicke am größten ist. Der Übergang zwischen der größten und kleinsten Gangtiefe verläuft aufgrund des für die Herstellung der Kanäle vorgesehenen Gewindewirbelverfahrens völlig sanft und gleichmäßig. Für einen Doppelschneckenextruder empfiehlt sich ein Zylinder, bei dem die größte Gangtiefe des Kanals etwa das 3- bis 5-fache, besonders bevorzugt etwa das 4-fache, der kleinsten Gangtiefe beträgt. Dabei kann es zweckmäßig sein, die Querschnittsform abweichend vom Rechteckquerschnitt zu wählen und eine konische Erweiterung des Querschnitts in radialer Richtung nach außen hin vorzusehen. Die Breite des jeweiligen Kanals vergrößert sich also nach außen hin. Das bedeutet, daß die Seitenflächen des jeweiligen Kanals im Längsschnitt durch den Zylinder nicht parallel zueinander verlaufen, sondern einen Winkel α einschließen. Dieser Winkel α liegt vorteilhaft in einem Bereich von 8 - 15°, insbesondere bei etwa 10°. Bei einer konischen Querschnittsform der Kanäle empfiehlt es sich, die mittlere Dicke der Stege zwischen jeweils zwei unmittelbar nebeneinander angeordneten Windungen des oder der Kanäle im Bereich des 1,5- bis 4-fachen der mittleren Breite des oder der Kanäle zu wählen. Bevorzugt wird eine mittlere Stegbreite, die etwa das 2,5-fache der mittleren Kanalbreite beträgt.

Um die Zu- und Ableitung des Temperiermediums auf möglichst einfache Weise zu bewerkstelligen, ist vorzugsweise vorgesehen, daß bei Zylindern mit mehreren versetzt nebeneinander laufenden Kanälen im Nahbereich der stirnseitigen Enden des Zylinders jeweils eine umlaufende Nut in den Zylinder eingearbeitet wird, in die die Kanäle münden. Die Anschlüsse für die Zu- und Ableitung des Temperiermediums werden dabei am hohlzylindrischen Mantel in entsprechender Weise jeweils im Bereich einer der beiden Nuten angeordnet. Den Nuten kommt also auf diese Weise die Funktion eines Verteilers oder Sammlers für die einzelnen Kanäle zu, so daß die Versorgung mit Temperiermedium bei Bedarf jeweils mit einem einzigen Leitungsanschluß für die Zuleitung und für die Ableitung erfolgen kann.

Außer den niedrigen Herstellkosten gewährleistet der erfindungsgemäße Zylinder einen effektiven Wärmeaustausch, da über die Beeinflussung der Gangtiefe der Kanäle die Fließwege für die Wärme innerhalb der Wand des Zylinders je nach Bedarf reduziert werden können. Erhöhte Widerstände für den Wärmefluß infolge von Trennflächen zwischen einzelnen Bauteilen werden bei der Erfindung vermieden. Bei einem vorgegebenen Durchmesser des Zylinders ist es für die Gestaltung des den Zylinder umgebenden hohlzylindrischen Mantels völlig gleichgültig, wieviele Kanäle mit welcher Querschnittsform und welcher Gangtiefe jeweils auf dem Zylinder angeordnet sind.

Nachfolgend wird die Erfindung anhand des in der Zeichnung dargestellten Ausführungsbeispiels näher erläutert. Es zeigen:
- Fig. 1: eine perspektivische Ansicht eines erfindungsgemäßen Zylinders,
- Fig. 2: eine Ansicht von der rechten Stirnseite des Zylinders gem. Fig. 1,
- Fig. 3: einen Längsschnitt gem. Linie A-A in Fig. 2 mit Darstellung der oberen Hälfte als Ansicht,
- Fig. 4: einen Längsschnitt gem. Linie B-B gem. Fig. 2 mit Darstellung der unteren Hälfte als Ansicht,
- Fig. 5: einen Querschnitt gem. Linie C-C in Fig. 3,
- Fig. 6: eine Ansicht der linken Stirnseite des Zylinders gem. Fig. 1 und
- Fig. 7: den in einen zylindrischen Mantel eingeschobenen Zylinder gem. Fig. 1 in teilweiser Seitenansicht und teilweisem Längsschnitt.

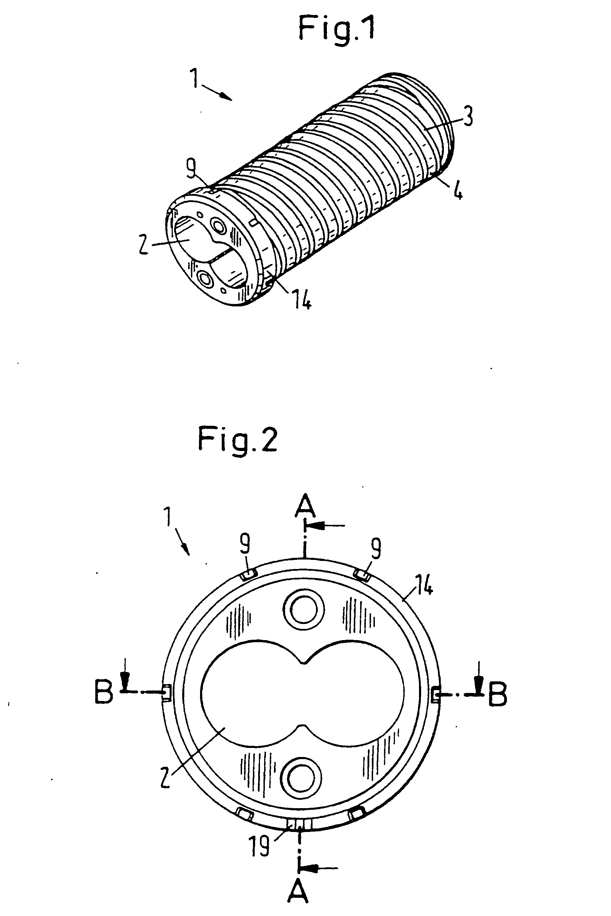

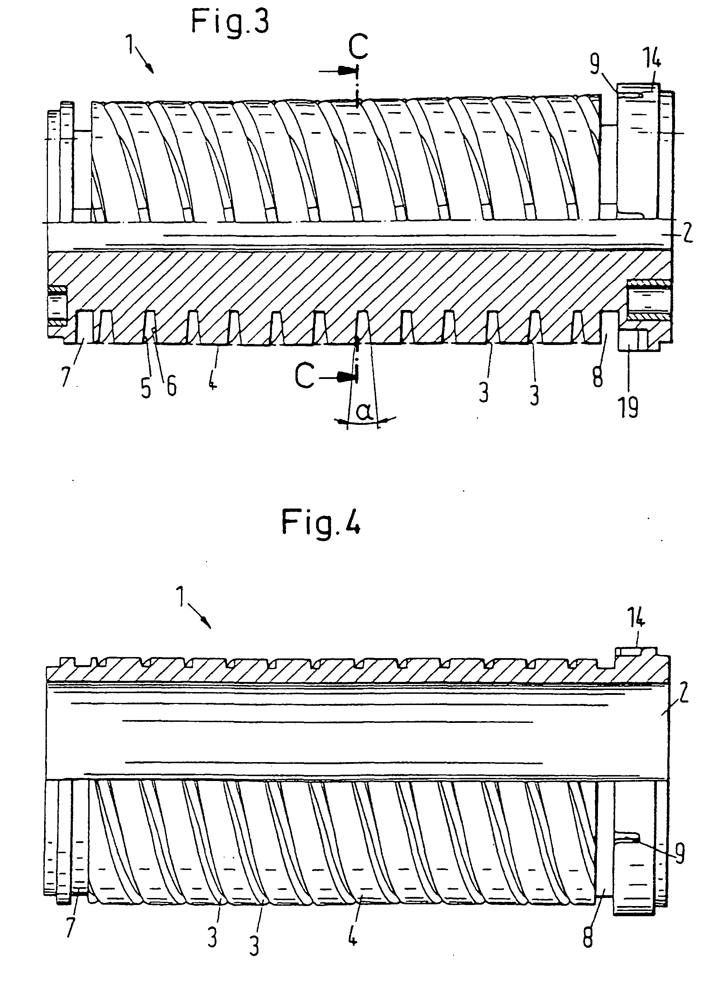

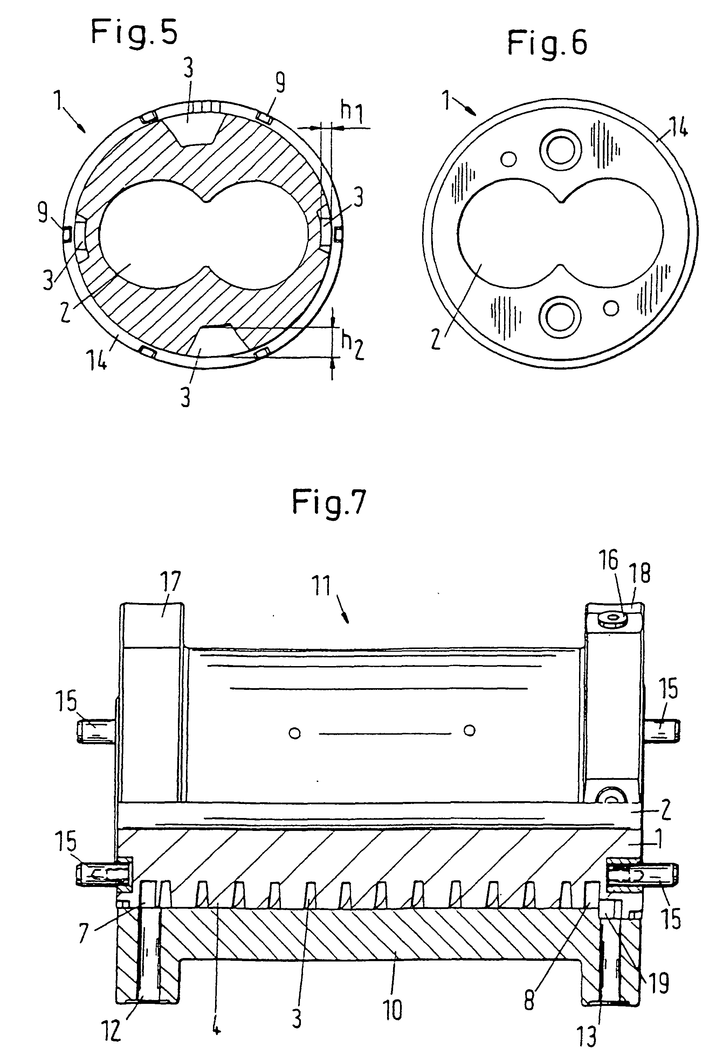

Der in Fig. 1 perspektivisch dargestellte Zylinder 1 ist für einen Extruder mit Doppelschneckenaggregat vorgesehen und weist daher zwei sich teilweise überlappende Bohrungen für die beiden nicht dargestellten, miteinander kämmenden Schnecken auf, wobei die Bohrungen zusammen einen Extrusionsraum 2 mit brillenartigem Querschnitt bilden. Im Bereich der linken Stirnseite des Zylinders 1 ist ein Anlageflansch 14 angeordnet, der, wie insbesondere aus den Fig. 3 und 4 hervorgeht, nur einen geringfügig größeren Durchmesser aufweist als der Zylinder 1 in seiner übrigen Länge. An der Außenseite des Zylinders 1 sind zahlreiche Windungen von schraubenlinienförmig in Längsrichtung des Zylinders 1 sich erstreckenden Kanälen 3 angeordnet, zwischen denen als Trennwände Stege 4 stehen.

Die Ausführung der Kanäle 3 ergibt sich im einzelnen aus den Schnittbildern der Fig. 3 bis 5. Der entlang der Linie A-A gem. Fig. 2 geführte axiale Längsschnitt in Fig. 3 zeigt, daß die Kanäle 3 jeweils Seitenwände 5, 6 aufweisen, die in einem Winkel α von etwa 10° zueinander geneigt sind , so daß sich der Kanalquerschnitt in radialer Richtung nach außen hin konisch erweitert. Die mittlere Breite der zwischen den einzelnen Windungen der Kanäle 3 bestehenden Stege 4 ist etwa 2- bis 2 ½ -mal so groß wie die mittlere Breite der Kanäle 3 (in Längsrichtung des Zylinders 1 gemessen). Aus dem entlang der Linie C-C gem. Fig. 3 geführten Querschnitt, der in Fig. 5 dargestellt ist, ergibt sich, daß es sich um insgesamt vier Kanäle 3 handelt, die sich äquidistant zueinander schraubenlinienförmig über den wesentlichen Teil der axialen Länge des Zylinders 1 erstrecken. Weiterhin erkennt man aus Fig. 5, daß die Gangtiefe der Kanäle 3, also deren Tiefe in radialer Richtung des Zylinders 1 über den Verlauf des Umfangs des Zylinders 1 hinweg nicht konstant ist, sondern sich gleichförmig verändert. Im Nahbereich der durch die Längsachsen des Extrusionsraums 2 aufgespannten Ebene, in der die Wand des Zylinders 1 den kleinsten Wert aufweist, liegt auch die geringste Gangtiefe vor, die mit h₁ bezeichnet ist. Um jeweils 90° versetzt hierzu, also im Zwickelbereich der brillenartigen Bohrung hat der Zylinder 1 seine größte Wanddicke. Dort ist auch die mit h₂ bezeichnete Gangtiefe der Kanäle 3 jeweils am größten. Die gleichförmige Änderung der Gangtiefe zwischen dem größten Wert h₂ und dem kleinsten Wert h₁ ergibt sich auf einfache Weise durch entsprechende Einstellung der Prozeßparameter bei dem zur Herstellung der Kanäle 3 angewendeten Gewindewirbelverfahren. Während Fig. 3 jeweils die Seitenansicht und den Längsschnitt im Bereich der größten Gangtiefe h₂ zeigt, ist in Fig. 4 der gem. Fig. 2 entlang der Linie B-B geführte, um 90° versetzte Längsschnitt dargestellt, also ein Längsschnitt im Bereich der kleinsten Gangtiefe h₁. Durch die Variierung der Gangtiefe über den Umfang des Zylinders 1 wird erreicht, daß die über den Umfang des Zylinders 1 extremen Unterschiede im Wärmefließweg zwischen dem Extrusionsraum 2 und den Kanälen 3 wesentlich vermindert werden. Die insgesamt vier Kanäle 3 münden jeweils in einer in der Nähe der stirnseitigen Enden des Zylinders 1 angeordneten umlaufenden Nut 7 bzw. 8, die die Funktion eines Verteilers bzw. eines Sammlers für die durch die Kanäle 3 zu führende Temperierflüssigkeit haben.

In Fig. 6 ist eine Ansicht der Stirnseite des Zylinders 1 mit dem Anlageflansch 14 dargestellt. Wie auch aus Fig. 2 hervorgeht, sind an beiden Stirnseiten des Zylinders 1 jeweils im Bereich der größten Wanddicke Bohrungen zur Aufnahme von Paßbolzen 15 vorgesehen, die in der Seitenansicht der Fig. 7 im einzelnen dargestellt sind. Fig. 7 zeigt zur Hälfte im Längsschnitt den Zusammenbau eines Vollzylinders 11, der aus dem Zylinder 1 und dem zugehörigen hohlzylindrischen Mantel 10 gebildet wird. Der hohlzylindrische Mantel 10, der an seinen Stirnseiten jeweils einen Verbindungsflansch 17, 18 aufweist, ist an seiner Innenseite glattflächig ausgebildet. Lediglich im Bereich des Anlageflansches 14 weist er einen Absatz mit vergrößertem Innendurchmesser auf, der dem Außendurchmesser des Anlageflansches 14 des Zylinders 1 entspricht. so daß der Anlageflansch 14 sich an diesen Absatz anlegen kann und im Sinne eines Anschiags gegen Verschiebungen in Längsrichtung des Zylinders 1 gehalten wird. Der Innendurchmesser des hohlzylindrischen Mantels 10 entspricht dem Außendurchmesser der Stege 4 des Zylinders 1, der somit wie eine "nasse Buchse" in dem hohlzylindrischen Mantel 10 eingebettet ist, so daß die einzelnen Windungen der Kanäle 3 in radialer Richtung nach außen abgeschlossen sind. Durch die Verbindungsflansche 17, 18 ist jeweils eine radiale Bohrung für die Zuleitung 12 und die Ableitung 13 für das Temperiermedium geführt, die im Bereich der bereits erwähnten umlaufenden Nuten 7, 8 enden. Die Verbindung der umlaufenden Nut 8 mit der Ableitung 13 ist nicht so unmittelbar wie bei der umlaufenden Nut 7 und der Zuleitung 12. Vielmehr erfolgt diese Verbindung hierbei über eine Ausnehmung 19 im Anlageflansch 14. Das Temperiermedium kann somit durch die Zuleitung 12 in die als Verteiler fungierende umlaufende Nut 7 strömen und von dort in die vier schraubenlinienförmigen Kanäle 3 gelangen. Nach Durchströmen der Kanäle 3 gelangt das Temperiermedium in die als Sammler fungierende umlaufende Nut 8 und wird von dort über die Ausnehmung 19 und die Ableitung 13 wieder aus dem Vollzylinder 11 abgezogen. Während des Durchströmens der Kanäle 3 findet ein effektiver Wärmeaustausch zwischen dem Temperiermedium und dem Extrusionsraum 2 statt.

Damit sich der Zylinder 1 nicht gegenüber dem hohlzylindrischen Mantel 11 verdrehen kann, sind im Umfangsbereich des Anlageflansches 14 Arretiernuten 9 angeordnet, in die von außen durch entsprechende Bohrungen, die radial durch den Verbindungsflansch 18 geführt sind, Stiftschrauben 16 eingreifen. Über die Verbindungsflansche 17, 18 können mehrere Vollzylinder 11 segmentartig zusammengesetzt und miteinander fest verbunden werden. Dabei ist es selbstverständlich möglich, bei konstruktiv unveränderten hohlzylindrischen Mänteln 10 hinsichtlich der Kanäle jeweils unterschiedliche Zylinder 1 zu verwenden, um dem entlang des Extrusionsraums unterschiedlichen Bedarf an Wärmeaustausch (Kühlung oder Heizung) optimal zu entsprechen.

Mit dem erfindungsgemäßen Zylinder wird eine sehr kostengünstige und im Hinblick auf die technischen Erfordernisse sehr effektive Lösung für die prozeßgerechte Temperierung eines Schneckenextruders geboten.

### Bezugszeichenliste

- 1: Zylinder
- 2: Extrusionsraum
- 3: Kanal
- 4: Steg
- 5: Seitenfläche des Kanals
- 6: Seitenfläche des Kanals
- 7: umlaufende Nut
- 8: umlaufende Nut
- 9: Arretiemut
- 10: hohlzylindrischer Mantel
- 11: Vollzylinder
- 12: Zuleitung
- 13: Ableitung
- 14: Anlageflansch
- 15: Paßbolzen
- 16: Stiftschrauben
- 17: Verbindungsflansch
- 18: Verbindungsflansch
- 19: Ausnehmung
- α: Winkel der Seitenwände
- h₁: kleinste Gangtiefe
- h₂: größte Gangtiefe

## Patentansprüche

1. Zylinder für einen Doppelschneckenextruder, wobei der Zylinder (1) unter der Bildung eines Extrusionsraums (2) eine Doppelschnecke des Extruders umschließt und seinerseits von einem auf seiner Innenoberfläche glatten hohlzylindrischen Mantel (10) umgeben ist, wobei an der Außenseite des Zylinders (1) mindestens ein sich schraubenlinienförmig in Längsrichtung des Zylinders (1) erstreckender Kanal (3) eingearbeitet ist, der an eine Zu- und Ableitung (12, 13) für ein fließfähiges Temperiermedium anschließbar ist, wobei der mindestens eine Kanal (3) durch einen Gewindewirbelvorgang in den Zylinder (1) eingearbeitet ist und der mindestens eine Kanal (3) über den gesamten Umfang von dem hohlzylindrischen Mantel (10) abgeschlossen ist und sich die Gangtiefe des mindestens einen Kanals (3) in radialer Richtung über den Umfang des Zylinders (1) in der Weise ändert, dass sie in den Bereichen am größten ist, wo die ursprüngliche Wanddicke des Zylinders (1) am größten ist, und dass sie in den Bereichen am kleinsten ist, wo auch die ursprüngliche Wanddicke des Zylinders (1) am kleinsten ist.

2. Zylinder nach Anspruch 1,
**dadurch gekennzeichnet,**
**daß** im Sinne eines mehrgängigen Gewindes mehrere Kanäle (3) insbesondere drei oder vier Kanäle (3), nebeneinander vorgesehen sind.

3. Zylinder nach einem der Ansprüche 1 - 2,
**dadurch gekennzeichnet,**
**daß** die Steigung der einzelnen Windungen des mindestens einen Kanals (3) in Längsrichtung des Zylinders (1)konstant ist.

4. Zylinder nach einem der Ansprüche 1 - 3,
**dadurch gekennzeichnet,**
**daß** der mindestens eine Kanal (3) einen im wesentlichen rechteckigen Querschnitt aufweist.

5. Zylinder nach einem der Ansprüche 1 - 4,
**dadurch gekennzeichnet,**
**daß** die Breite des mindestens einen Kanals (3) in Längsrichtung des Zylinders (1) das 0,7- bis 1,2-fache der Dicke der Stege (4) zwischen jeweils zwei unmittelbar nebeneinander angeordneten Windungen des oder der Kanäle (3) beträgt.

6. Zylinder nach einem der Ansprüche 1 - 5,
**dadurch gekennzeichnet,**
**daß** die größte Gangtiefe etwa das 3- bis 5-fache, insbesondere etwa das 4-fache der kleinsten Gangtiefe beträgt.

7. Zylinder nach einem der Ansprüche -1 - 3 oder 5 - 6,
**dadurch gekennzeichnet,**
**daß** sich die Breite des mindestens einen Kanals (3) in radialer Richtung nach außen hin vergrößert.

8. Zylinder nach Anspruch 7,
**dadurch gekennzeichnet,**
**daß** die Seitenflächen (5, 6) des mindestens einen Kanals (3) jeweils einen Winkel α im Bereich von 8 - 15°, insbesondere einen Winkel von etwa 10 ° einschließen.

9. Zylinder nach einem der Ansprüche -1 - 8,
**dadurch gekennzeichnet,**
**daß** die mittlere Dicke der Stege (4) zwischen jeweils zwei unmittelbar nebeneinander angeordneten Windungen des oder der Kanäle (3) das 1,5- bis 4-fache, insbesondere das 2,5-fache der mittleren Breite des oder der Kanäle (3) beträgt.

10. Zylinder nach einem der Ansprüche -1 - 9,
**dadurch gekennzeichnet,**
**daß** die Kanäle (3) im Nahbereich der stimseitigen Enden des Zylinders (1) jeweils in eine umlaufende Nut (7, 8) münden und die Anschlüsse für die Zu- und Ableitung (12, 13) des Temperiermediums jeweils im Bereich einer der beiden Nuten (7, 8) am hohlzylindischen Mantel (10) angeordnet sind.

## Claims

1. Cylinder for a twin-screw extruder, wherein the cylinder (1) encloses a twin-screw of the extruder thereby forming an extrusion chamber (2), and is in turn surrounded by a hollow cylindrical sheath (10) with a smooth inner surface, wherein on the exterior of the cylinder (1) at least one channel (3) is formed extending helically and longitudinally along the cylinder (1), the channel being connectable to an inlet and outlet (12, 13) for a flowing temperature control medium, wherein the channel (3), of which there is at least one, is worked into the cylinder (1) using a thread whirling process, and the channel (3), of which there is at least one, is enclosed round its entire circumference by the hollow cylindrical sheath (10), and the screw pitch of the channel (3), of which there is at least one, varies radially over the circumference of the cylinder (1) in such a way that it is greatest at the points where the original wall thickness of the cylinder (1) is greatest and is smallest at the points where the original wall thickness of the cylinder (1) is smallest.

2. Cylinder according to claim 1, **characterised in that** to form a multi-threaded screw several channels (3), in particular three or four channels (3), are provided adjacent to one another.

3. Cylinder according to one of claims 1-2, **characterised in that** the pitch of the individual threads of the channel (3), of which there is at least one, is constant along the length of the cylinder (1).

4. Cylinder according to one of claims 1-3, **characterised in that** the channel (3), of which there is at least one, has an essentially rectangular cross section.

5. Cylinder according to one of claims 1-4, **characterised in that** along the length of the cylinder (1) the width of the channel (3), of which there is at least one, is 0.7 to 1.2 times the thickness of the webs (4) between two immediately adjacent threads of the channel or channels (3).

6. Cylinder according to one of claims 1-5, **characterised in that** the greatest pitch depth is 3 to 5 times, in particular 4 times the smallest pitch.

7. Cylinder according to one of claims 1-3 or 5-6, **characterised in that** the width of the channel (3), of which there is at least one, increases outwardly in radial direction.

8. Cylinder according to claim 7, **characterised in that** the side faces (5, 6) of the channel (3), of which there is at least one, enclose respectively an angle α in the range of 8-15 °, in particular an angle of about 10°.

9. Cylinder according to one of claims 1-8, **characterised in that** the average thickness of the webs (4) between the two immediately adjacent threads of the channel or channels (3) is 1.5 to 4 times, in particular 2.5 times the average width of the channel or channels (3).

10. Cylinder according to one of claims 1-9, **characterised in that** the channels (3) near to the end faces of the cylinder (1) run into a rotating groove (7, 8), and the connection points for the inlet and outlet (12, 13) of the temperature control medium are positioned respectively at the point of one of the two groves (7, 8) on the hollow cylindrical sheath (10).

## Revendications

1. Cylindre pour une extrudeuse à deux vis, le cylindre (1) comprenant une vis sans fin à deux filets de l'extrudeuse sous la formation d'un espace d'extrusion (2) et est de son côté entouré par une gaine en forme de cylindre creux (10) lisse sur sa face intérieure, au moins un canal (3) s'étendant en forme d'hélice dans le sens longitudinal du cylindre (1) étant inséré sur la face externe du cylindre (1), ledit canal (3) pouvant être raccordé à une admission et à une évacuation (12, 13) pour un fluide tempéré, le canal (3) au nombre minimum d'un étant inséré dans le cylindre (1) via un processus de filetage à la volée et le canal (3) au nombre minimum d'un étant séparé de la gaine en forme de cylindre creux (10) sur toute la circonférence et la profondeur de filet du canal (3) au nombre minimum d'un étant variable dans le sens radial sur la circonférence du cylindre (1) de sorte qu'elle soit la plus grande dans les zones où l'épaisseur de paroi initiale du cylindre (1) est la plus grande, et qu'elle soit la plus petite dans lès zones où l'épaisseur de paroi initiale du cylindre (1) est également la plus petite.

2. Cylindre selon la revendication 1, **caractérisé en ce que** dans l'esprit d'un filetage à plusieurs filets, plusieurs canaux (3), en particulier trois ou quatre canaux (3), sont prévus adjacents.

3. Cylindre selon l'une quelconque des revendications 1 à 2, **caractérisé en ce que** le pas de chacune des spires du canal (3) au nombre minimum d'un est constant dans le sens longitudinal du cylindre (1).

4. Cylindre selon l'une quelconque des revendications 1 à 3, **caractérisé en ce que** le canal (3) au nombre minimum d'un présente une section transversale essentiellement rectangulaire.

5. Cylindre selon l'une quelconque des revendications 1 à 4, **caractérisé en ce que** la largeur du canal (3) au nombre minimum d'un atteint dans le sens longitudinal du cylindre (1) entre 0,7 et 1,2 fois l'épaisseur des méplats (4) entre deux spires du ou des canaux (3) disposées directement adjacentes à chaque fois.

6. Cylindre selon l'une quelconque des revendications 1 à 5, **caractérisé en ce que** la plus grande profondeur de filet atteint environ entre 3 à 5 fois, en particulier environ 4 fois la plus petite profondeur de filet.

7. Cylindre selon l'une quelconque des revendications 1 à 3 ou 5 à 6, **caractérisé en ce que** la largeur du canal (3) au nombre minimum d'un s'accroît en direction radiale vers l'extérieur.

8. Cylindre selon la revendication 7, **caractérisé en ce que** les faces latérales (5, 6) du canal (3) au nombre minimum d'un comprennent à chaque fois un angle α dans le domaine compris entre 8 et 15°, en particulier un angle d'environ 10°.

9. Cylindre selon l'une quelconque des revendications 1 à 8, **caractérisé en ce que** l'épaisseur moyenne des méplats (4) entre à chaque fois deux spires disposées directement adjacentes du ou des canaux (3) atteint de 1,5 à 4 fois, en particulier 2,5 fois la largeur moyenne du ou des canaux (3).

10. Cylindre selon l'une quelconque des revendications 1 à 9, **caractérisé en ce que** les canaux (3) dans la zone rapprochée des extrémités frontales du cylindre (1) débouchent à chaque fois dans une rainure circulaire (7, 8) et les raccordements pour l'admission et l'évacuation (12, 13) du fluide tempéré sont disposés à chaque fois dans la zone d'une des deux rainures (7, 8) sur la gaine (10) en forme de cylindre creux.
